Europäisches Patentamt

European Patent Office

Office européen des brevets

(11) Publication number: **0 385 227**
**A2**

# EUROPEAN PATENT APPLICATION

(21) Application number: **90103191.4**

(51) Int. Cl.⁵: **F16B 15/08, C09J 151/06**

(22) Date of filing: **20.02.90**

(30) Priority: **21.02.89 US 313268**

(43) Date of publication of application:
**05.09.90 Bulletin 90/36**

(84) Designated Contracting States:
**AT BE CH DE DK ES FR GB GR IT LI LU NL SE**

(71) Applicant: **ILLINOIS TOOL WORKS INC.**
**8501 West Higgins Road**
**Chicago Illinois 60631(US)**

(72) Inventor: **Lat, Geronimo E., c/o Patent**
**Attorneys**
**Keil & Schaafhausen, Eysseneckstrasse 31**
**D-6000 Frankfurt am Main 1(DE)**
Inventor: **Gabriel, William Leon, Patent**
**Attorneys**
**Keil & Schaafhausen, Eysseneckstrasse 31**
**D-6000 Frankfurt am Main 1(DE)**

(74) Representative: **Keil, Rainer A., Dipl.-Phys. Dr.**
**et al**
**KEIL & SCHAAFHAUSEN Patentanwälte**
**Eysseneckstrasse 31**
**D-6000 Frankfurt am Main 1(DE)**

(54) Fastener strips with foam adhesive and process for preparation.

(57) An improved fastener strip is provided wherein a foamed adhesive layer bonds the metal fasteners together in a strip and to a backing web member. Surprisingly and unexpectedly, the foamed adhesive layer can achieve physical strength properties comparable to those of a prior art unfoamed adhesive layer yet the total amount of adhesive required in the foamed layer is substantially reduced. The invention further provides a new and very useful process for making such fastener strips. A present preference is to employ a hot melt foamed adhesive comprised of a polyolefin polymer which has been chemically modified to be metal bonding.

FIG.1

# FASTENER STRIPS WITH FOAM ADHESIVE AND PROCESS FOR PREPARATION

## TECHNICAL FIELD

This invention lies in the field of fastener strips and methods for making the same.

## BACKGROUND OF THE INVENTION AND TECHNICAL PROBLEMS PROPOSED BY THE PRIOR ART

Fastener strips of nails or the like for use in rapid-acting fastener-driving apparatus, such as portable pneumatically activated nail-driving tools, are widely used in construction and are exemplified in such U.S. patents as Langas et al. 3,276,576, Shelton et al. 3,966,042, and Shelton et al. 4,343,579.

One important component in such strips is the adhesive that is employed to bond shank portions of an aligned row of such fasteners together relative to a backing web, or to a pair of such webs (where one adhesive coated web is located on each opposite side of the fastener row). The adhesive, as those skilled in the art have come to appreciate, needs to fulfill many requirements. Aside from fastener mechanical holding and positioning capability, and structural strength properties required for maintaining strip integrity during storage and use, the adhesive needs to have acceptable fracturing characteristics. Thus, the adhesive associated with the lead fastener member in a strip needs to fracture completely and in a predictable manner when such lead fastener member is struck with predetermined shear force upon its head end by the actuated striking head of the fastener-driving apparatus. This fracture should occur either in the adhesive material that is adjacent to the shank of such lead fastener member, or generally along the bond between the shank of such member and the adhesive. Concurrently, the material of the backing web itself to which the adhesive is itself bonded needs to tear and/or shear transversely at the time when the adhesive is so fractured without interfering with the fastener separation from the strip or the adhesive fracturing. After separation and release from the fastener strip, the fastener member moves downwardly (away from the striking head) and is driven into a workpiece. Bonded to, and carried along with, the driven fastener as it moves into the workpiece is adhesive material which is adhered to the fastener and, also, typically, small portions of the backing web.

Typical strip adhesives heretofore known in this art are believed to be of the thermoplastic hot melt type permitting hot application of a layer of such adhesive upon a backing web followed by cooling and the subsequent impressing of heated fasteners into the resulting adhesive layer. Adhesives which have a desirable combination of such properties and which are suitable tend to constitute a significant expense item in the cost of manufacturing fastener strips.

There is a continuing need in this art for strip adhesive systems which not only have the necessary characteristics required for use in commercially acceptable fastener strips, but which also have favorable economics.

## SUMMARY OF THE INVENTION

In one aspect, the present invention relates to a new and improved fastener strip structure adapted for use in rapid acting fastener-driving apparatus. Such fastener strip employs a foamed adhesive layer.

Surprisingly and unexpectedly, it has now been discovered that, by using a foamed adhesive layer, fastener strip performance characteristics can be achieved which are approximately equal to those associated with fastener strips employing a solid (unfoamed) adhesive layer as in the prior art, yet the total quantity of adhesive employed in the foamed adhesive layer can be substantially reduced compared to the amount of adhesive utilized in such prior art solid adhesive layer. One result is that the costs of fastener strips manufacture are significantly reduced.

Another advantage of the present invention is that the foamed adhesive layer provides increased resistance of a product fastener strip to so-called "strip corrugation" by virtue of thicker cross section and distribution of the compressive loads on the strip. Strip corrugation is a phenomenon sometimes observed in automatic fastener-driving apparatus involving the longitudinal compressing together of adjacent fastener shanks in a strip, causing undesirable driving apparatus malfunctioning and strip jamming.

In another aspect, the present invention provides an improved process for the preparation of fastener strips. In this process, a backing web is precoated with a foamed thermoplastic hot melt adhesive and thereafter heated fastener members are impressed into the adhesive layer.

Surprisingly and unexpectedly, the foamed structure associated with the adhesive layer is not destroyed during the heated nail impressing.

Also, and advantageously, the height of the adhesive material which resultingly upstands along opposing sides of nail shanks after impressing hot nails into the foamed adhesive layer is increased compared to corresponding such heights achieved under comparable impressing conditions employed in the prior art with solid adhesive layers. The result is better bonding efficiency between nails and adhesive.

Further, and advantageously, the hot nail adhesive impressing techniques hereto used in the prior art for the preparation of fastener strips can be employed, if desired, when making the fastener strips of the present invention which employ a foamed adhesive layer. Thus, costly capital improvements or changes in manufacturing procedures are not necessary in order to utilize a foamed adhesive layer, and thereby realize the features and advantages of the present invention, in a fastener strip structure.

Various other and further features, embodiments, and the like which are associated with the present invention will become apparent and better understood to those skilled in the art from the present description considered in conjunction with the accompanying drawings wherein presently preferred embodiments of the invention are illustrated by way of example. It is to be expressly understood, however, that the drawings and the associated accompanying portions of this specification are provided for purposes of illustration and description only, and are not intended as limitations on the invention.


## BRIEF DESCRIPTION OF THE DRAWINGS


In the drawings:

FIG. 1 shows a plan view of a fragment of one embodiment of a strip of nails of the present invention wherein the nail shanks are adhered to a foamed adhesive layer that is bonded to a backing web;

FIG. 2 is a vertical, greatly enlarged, sectional view taken along the line II-II of FIG. 1;

FIG. 3 is a fragmentary view similar to FIG. 2, but showing for comparative purposes an embodiment of a corresponding strip of nails of the prior art wherein the adhesive layer is solid and is not foamed;

FIG. 4 shows a plan view of a fragment of another embodiment of a strip of nails of the present of invention wherein a pair of connecting tapes is utilized with each tape of said pair being bonded through its respective foamed adhesive layer to a different opposed side of each shank of all nails in the strip;

FIG. 5 is an enlarged, vertical, sectional view taken along the line V-V of FIG. 4; and

FIG. 6 is a block diagrammatic flow sheet illustrating one embodiment of a process for making a strip of nails of the present invention.


## DESCRIPTION OF THE PREFERRED EMBODIMENTS


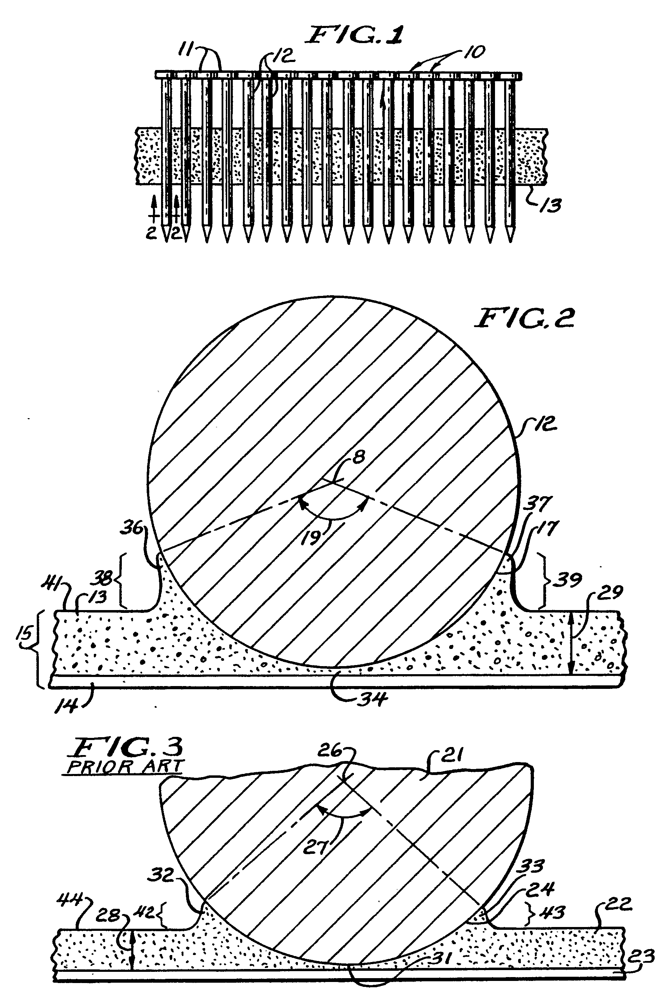

Referring first to FIGS. 1 and 2, there is shown an embodiment of an adhered strip of common nails 10 having flat heads 11 and cylindrical shanks 12. Nails 10 are substantially identical to one another and all shanks 12 are disposed in aligned, closely spaced, parallel relationship to one another. Nails 10 are adhered in strip form to the foamed adhesive layer 13 which is deposited upon and bonded to a backing web member 14. Web 14 and foamed adhesive layer 13 comprise a nail connecting tape structure 15 (see, for example, FIG. 2). In this embodiment, the nail heads 11 are full heads which are coplanar, and are disposed in abutting relationship relative to one another. The strip of this embodiment can be, if desired, convolutedly coiled into a spiral arrangement (not shown) for insertion into the magazine of a fastener-driving apparatus (not shown). When in use, the strip advances, and successively the entire area of each head 11 is exposed to the striking head of the driving apparatus.

As shown in FIG. 2, the foamed adhesive layer 13 contacts a portion 17 of each shank 12 and is bonded thereto, and as such positively retains each nail 10 in place relative to the tape 15. Relative to the axis 18 of a nail 10, an angle 19 is subtended by the adhesive/nail interface portion 17.

For comparative purposes, there is shown in FIG. 3 (as indicated above), the relationship between a nail shank 21 and an adhesive layer 22 is shown. The shank 21 corresponds to a shank 12 of a nail 10, but shank 21 is mounted in a solid (unfoamed) adhesive layer 22 that is associated with, and bonded to, a backing web member 23, all as known to the prior art. The contacting portion 24 between shank 21 and adhesive layer 22 is shown for example in FIG. 3. The axis 26 of shank 21 defines an angle 27 between the edge portions of the adhesive/nail interface portion 24 (which corresponds to the contacting portion 17 in the foamed adhesive layer structure shown in FIG. 2).

It is presently preferred that the density of the foamed adhesive layer 13 should be such that the layer 13 density is from about 0.85g/cc to about 0.75g/cc, for a resin having a density of about 0.94g/cc when unfoamed, although greater and lesser densities of the foamed adhesive layer can be employed without departing from the spirit and scope of the present invention. As a result of being foamed, the thickness 29 of the foamed adhesive layer 13 is greater than the thickness 28 of the adhesive layer 22.

For present illustrative purposes, it is assumed that the total amount of adhesive material employed in the layer 22 approximately corresponds to the total amount of adhesive material employed in the layer 13, and it is further assumed that the chemical composition of the adhesive layer 22 is substantially the same as the composition of the adhesive layer 13 (except for possible minor differences caused by the addition of a blowing agent to the adhesive composition) at the time when the layer 13 upon the web 14 is produced, as hereinafter described.

When the shank 21 is heated and impressed into the adhesive layer 22 to an extent sufficient to produce a spacing 31 between shank 21 and backing web member 23 at the location of closest approach of shank 21 to web member 23, portions 32 and 33 of the adhesive comprising adhesive layer 22 upstand along each side of shank 21 in the portion 24, as shown, for example, in FIG. 3. Similarly, when the shank 12 of identical nail 10 is impressed under corresponding conditions into the foamed adhesive layer 13 to produce an equal spacing 34 between shank 12 and the adjacent surface of backing web member 14, the portions 36 and 37 of the adhesive in the foamed adhesive layer 13 upstand along the shank 12 in the portion 17 as shown, for example, in FIG. 2. A vertical height 38 and 39, respectively, of each portion 36 and 37 relative to the surface 41 of the foamed adhesive layer 13 is substantially greater than the respective heights 42 and 43 of portions 32 and 33 relative to the surface 44 of solid adhesive layer 22. Such differences in the thickness of foamed adhesive layer 13 (compared to the thickness of solid adhesive layer 22) added to the height differences of the respective portions 36 and 37 (compared to the heights of the portions 32 and 33 of layer 22) result in a larger circumferential portion of the surface of the shank 12 being coated with and bonded to the adhesive of the foamed adhesive layer 13 compared to the area of the shank 21 which is bonded to the layer 22 of unfoamed adhesive. Consequently, the area of contacting portion 17 is surprisingly substantially greater than the area of contacting portion 24, and also the angle 19 is substantially greater than the angle 27.

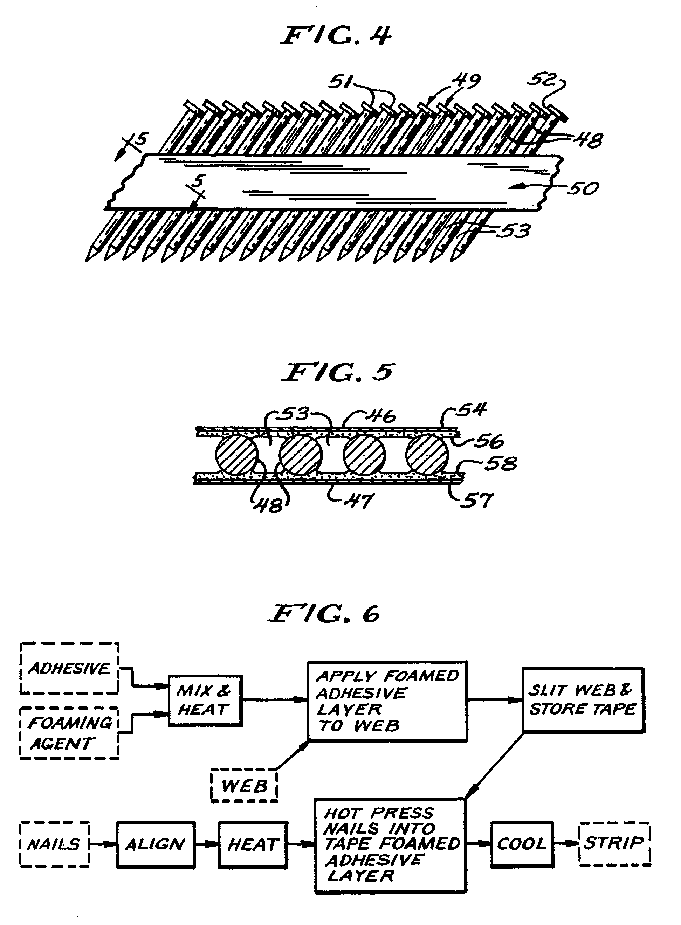

A preferred fastener strip embodiment of this invention is illustrated in FIGS. 4 and 5 wherein a pair of taped strips 46 and 47 are employed with one such strip being positioned in opposed relationship to the other thereof on each side of the shanks 48 of a plurality of nails 49 arranged so that all shanks 48 are disposed in aligned, closely spaced, parallel relationship relative to one another. The nails 49 are here illustratively angularly disposed with the head 51 of each nail being located beneath the corresponding head 51 of the nail located adjacent thereto, and each head 51 being in contact with the shank 48 of the adjacent nail 49. If desired, the space 52 between the overlapped heads 51 can be varied depending on the configuration that the product strip is to take. The shanks 48 are spaced apart by an amount equal to the width of the overlapping head portion as indicated by the space 53 between adjacent nails 49 as illustrated, for example, in FIGS. 4 and 5.

A typical configuration for a strip of the type illustrated in FIGS. 4 and 5 is one wherein the nails 49 form an angle of about 30 degrees with the horizontal when they are mounted for firing (driving) in the magazine of a fastener-driving tool (not shown). When located in such magazine, the head portion of the lowermost (or leading) nail in the strip which nail is not covered by the adjacent nail is exposed to the nail driver, whereby the nail may be driven into a workpiece to be joined, such as a board or the like.

The nails 49 are retained in the relationship shown in FIG. 4 by the tape strips 46 and 47. Each of the tape strips 46 and 47 preferably has a structure similar to that shown and above described in reference to the tape 15. Thus, tape strip 46 has a backing web member 54 and a foamed adhesive layer 56, while tape strip 47 has a backing web member 57 and a foamed adhesive layer 58. Alternatively, only one of the strips 46 and 47 has a foamed adhesive layer (with the adhesive layer in the other such tape being unfoamed). The tape strips 46 and 47 are each mounted on an opposing side of the shanks 48 with each tape engaging a medial portion of each shank 48 and extending in a direction parallel to a line joining the heads 51 of the nails 49.

A fastener strip structure of the type illustrated, for example, in FIGS. 4 and 5 will have a limited amount of resiliency to prevent fracture in the event that such a strip is dropped, but will retain a strip in its assembled form so that it may be readily inserted into the magazine of an automatic fastening apparatus adapted to receive same in a proper position for firing (driving).

Characteristically, in the fastener strip structures of this invention, there needs to be no material, such as a plastic or the like, located between adjacent shanks such as would tend to bring about jamming when the nails are driven. The fastener strips of the present invention can be easily manufactured and require a minimum amount of adhesive.

Even though the total amount of adhesive material in the layer 13 is identical to the amount of adhesive material in the layer 22, the amount of shear force which is applied by the actuated striking head of fastener-driving apparatus, and which is needed to release a nail 10 from a fastener strip, such as shown in FIG. 1 or FIG. 4, is greater than the amount of applied shear force (identically exerted) which is required to release the shank 21 of an identical nail from an unfoamed adhesive layer 22 in a corresponding fastener strip structure, such as shown in FIG. 3. Thus, in order to achieve similar nail-shearing action in fastener-driving apparatus, the amount of adhesive material needed in a fastener strip structure, such as shown in FIGS. 1 and 2, or in FIGS. 4 and 5 (described below) can be reduced compared to a fastener strip structure of the prior art (such as illustrated in FIG. 3 in comparison to the strip structure of FIGS. 1 and 2). This result is surprising and unexpected. Savings are thus realizable in the amount of adhesive material which is needed to make a fastener strip, thereby reducing the costs of manufacturing such.

Even when a fastener strip structure is manufactured which employs a foamed adhesive layer such as is taught by the present invention, a further advantage is surprisingly and unexpectedly realized, namely, the strip corrugation resistance of the resulting fastener strip of this invention is increased. Evidently (and there is no intent herein to be bound by theory), the strip composite structure resulting from the presence of the foamed adhesive layer in a fastener strip structure is better able to resist longitudinal compression forces tending to urge adjacent fastener shanks towards one another in a fastener strip in a fastener-driving apparatus.

Fastener strips of this invention may be prepared by any convenient means, but it is presently preferred to assemble these fastener strips by pressure-applying heated nails to a tape strip carrying a foamed adhesive layer or by pressure-applying such a strip to heated nails.

In one preferred procedure for making fastener strips of this invention, one extrudes a coating of a thermoplastic hot melt adhesive onto a web member in combination with a blowing agent which is activated at the extrusion temperature. There is thus produced foaming which, when foaming is completed and the resulting layer on the product web structure has been cooled, results in a foamed adhesive layer that is bonded to the backing web.

To make a fastener strip using such a tape, one heats a plurality of substantially identical shanked fastener members (as above described) to a temperature in the range where the adhesive in the foamed adhesive layer is softenable. The fastener shank is longer than the transverse width of the backing web and the tape strip used.

One impresses each such so heated fastener member transversely and uniformly into the adhesive layer of such a tape strip. Each so adhered shank is in spaced, parallel, aligned relationship with the shanks of adjacent fastener members, as described above particularly in reference to FIG. 2. The impressing procedure characteristically produces a raised region of adhesive on either side of the shank of each nail or fastener member with the adhesive being bonded to each fastener member in regions of contact therebetween, such as above described. A present preference is to prepare preliminarily a group of nails which are all held in a spaced, parallel, aligned relationship to one another and which are all uniformly heated prior to the time when such nails as a group have such tape impressed thereagainst, so as to produce a product strip which corresponds either to a structure such as is illustrated, for example, in FIGS. 4 and 5, or as is illustrated, for example, in FIGS. 1 and 2, or otherwise as described. Mounting pressures applied between a tape strip and heated nails vary depending upon many variables such as nail size, adhesive layer foam characteristics, extent of bonding desired between individual fasteners and the adhesive layer, natures of the fasteners, the foamed adhesives, the backing web members, and the like, so that it is not possible to give exact heating and pressing conditions applicable to all possible fastener strip structures of the present invention.

One convenient procedure embodying the process procedure above described is illustrated in the flow diagram of FIG. 6 which procedure is to be believed to be largely self-explanatory and to require no detailed description herein in the light of the description herein.

One of the surprising advantages of the present invention is that hot melt adhesives of the chemically modified polyolefin type, such as have been heretofore employed in the manufacture of prior art fastener strips, can be used to make a fastener strip of the present invention which incorporates a foamed adhesive layer. Such prior art adhesives appear to be foamable (blowable) by means of the conventional foaming (blowing) agents heretofore known to the prior art without substantially altering the desirable adhesive properties achievable in a product fastener strip.

Any of a variety of commercially available metal-bonding adhesives can be suitably foamed for purposes of this invention. It is presently preferred to use hot melt adhesives having melt temperatures in a range of about 375° F to about 525° F. Hot melt, chemically modified and/or rubber-modified polyolefin are preferred, as exemplified by such materials as Bynel[tm] E200 rubber-modified high density polyethylene, Bynel[tm] E331 rubber-modified low density polyethylene, and Bynel[tm] E205 chemically modified linear low density polyethylene, such Bynel[tm] resins being available commercially from E. I. duPont de Nemours, Inc., Wilmington, Delaware, Admer[tm] NF500 and Admer[tm] NF550 high density polyethylene-based resins available commercially from Mitsui Petrochemical Industries, Ltd., Tokyo, Japan, Plexar[tm] 6 chemically modified, rubber-modified high density polyethylene available commercially from Quantam Chemical Corporation, Cincinnati, Ohio, Igetabond[tm] E and Igetabond[tm] G modified polyolefins available commercially from Sumitomo Chemical Co., Ltd., Osaka, Japan, Primacor[tm] resins discussed below, and the like.

The chemical modification can be accomplished by various means. For example, acrylic acid can be grafted on gamma irradiated low-density polyethylenes to produce adhesives for aluminum. Alternatively, acrylic acid can be copolymerized with ethylene to produce an adhesive resin (such as the low modulus, low-density resins available commercially from the Dow Chemical Company, Midland, Michigan, under the trademark "Primacor." Polyolefins, for example, can be modified with unsaturated acids or acid anhydrides by various grafting processes, such as grafting high-density polyethylene with unsaturated bridged dicarboxylic acid anhydrides (as taught for example, by U.S. Patents Nos. 4,087,587, 4,087,588, and 4,298,712). Also, for example, graft-modified polyolefin resins can be blended with a hydrocarbon elastomer to further improve adherability and physical properties of the resin (see, e.g., U.S. Patent No. 4,198,327). A presently preferred composition is a blend of graft-modified polyolefin and an elastomer.

The foaming agents utilized in the practice of the present invention are added to hot melt adhesive systems during the processing thereof to produce a foamed adhesive layer upon a backing web member. The chemicals used as foaming agents form minute gas cells throughout the adhesive layer. In one preferred procedure, the foaming agent is added directly to an extruder barrel at the time when the hot melt adhesive is being processed therethrough for coating upon a backing web member.

Foaming agents useful in the practice of this invention can be physical or chemical in their operation. Chemical foaming agents (generally solids) undergo a chemical transformation when producing the gas used for foaming while physical foaming agents (generally gases or liquids initially) undergo a reversible physical change-of-state through vaporization. It is presently preferred to employ chemical foaming agents in the present invention to make starting tape strips.

Liquid physical foaming agents can be used. Suitable such agents are short-chain aliphatic hydrocarbons and their chlorinated and fluorinated analogs. Liquid physical foaming agents are usable over a wide temperature range in low-pressure atmospheric extrusion coating processes.

Chemical foaming agents are presently preferred and are selected based upon their decomposition temperature. It is desirable to match the decomposition temperature with the processing temperature of the polymer to be foamed. Suitable low-, medium-, and high-temperature foaming agents are well known to the art; see for example the article entitled "Foaming Agents" by Raymond Shute appearing in Modern Plastics Encyclopedia '88 at pages 152-158, which is incorporated herein by reference.

In one process of preparing tape strips for use in this invention, a continuous film of foaming molten thermoplastic adhesive is extruded from a slot die. The extruded film is applied to a moving web of substrate, preferably paper. Extrusion laminating rolls aid in spreading and bonding the molten polymer film to the web substrate. Such application to a web substrate is accomplished in the nip region between a pair of rollers, such as a rubber roll and a chill roll, or two chill rolls.

Conveniently, conventional thin-film or low-tension types of extrusion coating and laminating equipment are used. Operating tension levels for the starting substrate web are in the range from about 8 to 200 pounds. Chill rolls normally are steel and are constructed with a double shell. Heat is removed from the laminate by the rollers. It is preferred to maintain a temperature rise between the respective chill roll inlets and outlets of about 2-3° F. using, for example, high-velocity chilled water circulation.

Alternatively a preformed film of foamed thermoplastic adhesive, an intermediate bonding layer of a suitable adhesive, and a substrate, such as paper, are laminated so as to form a laminated structure.

The coated or laminated structure normally is edge-trimmed at the laminator and the product coated tape is conveniently slit prior to winding at a turret or single drum winder into tapes.

The preformed tapes used in the practice of this invention preferably have a foamed adhesive layer which is less than about one-third the diameter of the shanks of the fasteners used to make a given strip product, and more preferably such layer is less than about one-fifth the diameter of the shanks.

The following examples are offered to specifically illustrate this invention. These examples are not to be construed as limiting the scope thereof, however.

EXAMPLE 1: Tape Preparation

An extrudable, modified polyolefin based adhesive resin (e.g. Igetabond[tm] E resin discussed above) in pellet form is charged to a 4 1/2" extruder in combination with a blowing agent which is available commercially from Rite Systems, West Chicago, Illinois, under its trade designation LQC-A113-2, and which is understood to contain azodicarbonamide as the active agent. The heated extrudate at a melt temperature in the range of about 425°F to about 535°F is charged through a slot die to produce a continuous film of foaming molten thermoplastic. This is then applied to a moving substrate web. The substrate web comprises kraft paper.

The relationship between quantity of resin and quantity of foaming agent is adjusted to produce in the coated adhesive layer of the product coated web a void volume of about 10%. The slot die orifice setting is such that the thickness of the coated foamed adhesive layer in the product coated web is about 8 mils.

EXAMPLES 2-5: Further Tape Preparation

The procedure of EXAMPLE 1 is repeated to produce tape rolls made with the same substrate kraft paper web and the same foaming agent except that the adhesive resin is Plexar[tm]6 resin discussed above. However, the weight ratio of resin to foaming agent, the slit die orifice setting, and other equipment settings, are varied as needed to produce product coated webs wherein the adhesive layer has different void volumes, densities, and layer thicknesses, as shown in TABLE II below:

TABLE II

| Tape Structures | | | | |
| --- | --- | --- | --- | --- |
| | | | Adhesive Layer[2] | |
| ID No. | Web Thickness[1] | Foamed Resin Thickness | Void Volume | Foam Density |
| 1 | 9 mils | 7 mils | 3.5% | 0.907 g/cc |
| 2 | 9 mils | 7 mils | 10% | 0.856 g/cc |
| 3 | 9 mils | 7 mils | 20% | 0.752 g/cc |

TABLE II FOOTNOTES:

(1) Web characteristics same as stated in EXAMPLE 1.
(2) Resin and foaming agent same as in EXAMPLE 1. All values approximate.

Example 6: Nail Strip Preparation

From a supply of clipped-head common steel nails about 3 inches in length, individual nails are positioned in a rack to provide a straight row of aligned, closely spaced parallel nails inclined at about 30°, as shown in FIG. 4. The nails in the rack are then heated to a nominal surface temperature of about 400°F.

Next, from each of a pair of spaced, axially parallel rolls of tape (prepared as described in EXAMPLE 1) strips are withdrawn and placed against the mid-region of the heated nail row commencing at one end thereof and progressing to the other end thereof to produce a strip configuration as shown in FIGS. 4 and 5 wherein each individual tape is on a different side of the nail row with the individual tapes being in such opposed relationship to one another. As the tape strips are contacted with nail shanks, opposing outside faces of the strips are compressed together with a uniformly applied force which impresses the hot shanks of the individual nails into the adhesive layer of each strip.

Thereafter, the resulting nail strip is cooled and then removed from the rack.

EXAMPLES 7-10: Further Nail Strip Preparation

The procedure of EXAMPLE 6 is repeated with respective tape pairs prepared as described in each of EXAMPLES 2-4 above to produce various nail strips.


EXAMPLE 11: Comparative Nail Strip of the Prior Art

The procedure of EXAMPLE 1 is repeated, but no foaming agent is used (so that the same quantity of adhesive is used). The solid (unfoamed) adhesive layer thickness in the product web is 7 mils.

Thereafter, a nail strip is prepared using the procedure of EXAMPLE 6 using a tape pair formed from such product web.


EXAMPLE 12: Use

When each of the nail strips of EXAMPLES 6-10 is used in a Paslode$^{tm}$ Model 5300S pneumatically activated nail-driving tool available commercially from ITW Paslode (Paslode Corporation), Lincolnshire, Illinois, for driving the nails into SPF (spruce-pine-fir) wood, it is found that performance of the strips is of commercially acceptable quality.

When performance of the nail strip of EXAMPLE 6 is compared to the performance of the nail strip of EXAMPLE 11, it is found that overall performance of strip integrity, tool compatibility, and holding power of the nails were comparably favorable.

The foregoing specification is intended as illustrative and is not to be taken as limiting. Still other variations within the spirit and the scope of the invention are possible and will readily present themselves to those skilled in the art.


**Claims**

1. A strip of fasteners for use in a rapid-acting fastener-driving apparatus comprising:
a plurality of substantially identical metal fasteners, each having an elongated cylindrical shank, all shanks being disposed in aligned, closely spaced, parallel relationship to one another,
first connecting tape means comprising a first backing member and a first adhesive layer bonded on one face thereof,
said tape means extending tangentially across a portion of each said shank with said first adhesive layer facing said shanks and being bonded thereto, said shank portions each being impressed into said first adhesive layer with a portion of said first adhesive layer upstanding along each shank side;
said first adhesive layer being foamed.

2. The strip of claim 1 wherein the void volume of said foamed adhesive tape is at least about 10 weight percent.

3. The strip of claim 1 wherein the void volume of said foamed adhesive layer is in the range of about 10 to about 20 weight percent.

4. The strip of claim 1 wherein the thickness of said foamed adhesive layer in the central region between each pair of adjacent said shanks is less than about one-third the diameter of each said shank.

5. The strip of claim 1 wherein the thickness of said foamed adhesive layer in the central region between each pair of adjacent said shanks is less than about one-fifth the diameter of each said shank.

6. The strip of claim 1 wherein said foamed adhesive layer is comprised of a thermoplastic, foamed adhesive composition comprised of a polyolefin base polymer which has been chemically modified to be metal-bonding.

7. The strip of claim 6 wherein said polyolefin polymer comprises a high-density polyethylene base polymer.

8. The strip of claim 1 wherein said strip includes a second connecting tape means comprising a second backing member and a second adhesive layer bonded on one face of said second backing member, said second tape means extending tangentially across a portion of each said shank with said second adhesive layer facing said shanks and being bonded thereto, said second tape means being located in generally opposed relationship to said first connecting tape means on the opposite side of said strip, said shank portions each being impressed into said second adhesive layer with a portion of said second adhesive layer upstanding along each shank side.

9. The strip of claim 8 wherein said second adhesive layer is foamed.

10. The strip of claim 8 wherein said second adhesive layer has a void volume and a density approximately identical to the void volume and density associated with said first adhesive layer.

11. The strip of claim 8 wherein said second adhesive layer has a chemical composition which is substantially identical to the chemical composition of said first adhesive layer.

12. A process for making a fastener strip for use in a rapid-acting fastener-driving apparatus comprising the steps of;

(a) extruding upon one side of a backing web a coating comprised of a thermoplastic hot melt adhesive in a melted state in combination with a foaming agent, said foaming agent being activated at a temperature which is in the range where said adhesive is in said melted state, thereby to produce a tape comprising a foamed adhesive layer that is bonded to said backing web,

(b) cooling said tape,

(c) heating a plurality of substantially identical fastener members to a temperature in the range where said foamed adhesive layer is softenable, each of said fastener members having an elongated shank which is longer than the transverse width of said backing web,

(d) impressing said so-heated fastener members transversely and uniformly into said adhesive layer with each said shank being in spaced, parallel, aligned relationship with adjacent said fastener member, thereby to produce on either shank side of each said fastener member an upstanding portion of said adhesive layer, said adhesive in said layer being bonded to each said shank at locations of contact therebetween, and

(e) cooling the resulting strip assembly.

13. The process of claim 12 wherein said void volume of said foamed adhesives layer is at least about 10 weight percent.

14. The process of claim 12 wherein said void volume of said foamed adhesive layer is in the range of about 10 to about 20 percent.

15. The process of claim 12 wherein the thickness of said foamed adhesive layer is less than about one-third the diameter of each said shank.

16. The process of claim 12 wherein the thickness of said foamed adhesive layer is less than about one-fifth the diameter of each said shank.

17. The process of claim 12 wherein said foamed adhesive layer is comprised of a thermoplastic composition comprised of a polyolefin base polymer which has been chemically modified to be metal bonding.

18. The process of claim 17 wherein said polyolefin comprises a high-density polyethylene base polymer.

EP 0 385 227 A2

**FIG.1**

**FIG.2**

**FIG.3**
**PRIOR ART**

## FIG. 4

## FIG. 5

## FIG. 6